# EUROPEAN PATENT APPLICATION

(11) **EP 4 319 398 A1**
(43) Date of publication of application: **07.02.2024**
(21) Application number: 22778860.1
(22) Date of filing: 28.03.2022
(51) Int. Cl.: H04W 72/04

(54) **DATA TRANSMISSION METHOD AND APPARATUS, AND STORAGE MEDIUM**

(30) Priority: 02.04.2021 CN 202110363685
(71) Applicant: Datang Mobile Communications Equipment Co., Ltd., Beijing 100085 (CN)
(72) Inventor: MIAO, Jinhua, Beijing 100085 (CN); FU, Jing, Beijing 100085 (CN); LIANG, Jing, Beijing 100085 (CN)
(74) Representative: Studio Torta S.p.A.
(86) International application number: PCT/CN2022/083394
(87) International publication number: WO 2022/206678

(57) **Abstract**

The embodiments of the present disclosure provide a data transmission method and apparatus, and a storage medium. The method comprises: receiving an indication message sent by a network device, wherein the indication message includes related information of a signaling radio bearer SRB1 and/or a signaling radio bearer SRB2; and determining, on the basis of the indication message, whether to execute data transmission on the SRB1 and/or the SRB2 in a small data transmission (SDT) mode. The embodiments of the present disclosure solve the problem of an increased transmission delay caused by the fact that a terminal cannot execute data transmission on SRB 1 and/or SRB2 by using SDT.

## Description

### CROSS-REFERENCE TO RELATED APPLICATION

The present application claims priority to Chinese patent application No. 2021103636856 filed on April 02, 2021, entitled "Data Transmission Method and Apparatus, and Storage Medium", which is hereby incorporated by reference in its entirety.

### FIELD

The present application relates to the field of communication, and in particular, to methods and apparatuses for data transmission and a storage medium.

### BACKGROUND

When a terminal is in a radio resource control (RRC) inactive state, and some services need to be executed at present, the terminal needs to enter a connected state through a random access procedure. This will cause more signaling overhead and waste of network resources. How to transmit data in an inactive state to reduce signaling overhead and save power consumption of the terminal has become an important problem that needs to be solved urgently.

### SUMMARY

Embodiments of the present application provide methods and apparatuses for data transmission and a storage medium, to solve the problem of how to transmit data in an inactive state to reduce signaling overhead and save power consumption of a terminal.

An embodiment of the present application provides a method for data transmission, including:
receiving an indication message transmitted from a network device, where the indication message includes association information of a signaling radio bearer 1 (SRB 1) and/or a signaling radio bearer 2 (SRB2); and
determining whether to transmit data on the SRB1 and/or the SRB2 in a small data transmission (SDT) mode based on the indication message.

In an embodiment, the determining whether to transmit the data on the SRB 1 and/or the SRB2 in the SDT mode based on the indication message includes:
in case that the association information is that a serving cell where a terminal camps supports transmitting the data on the SRB 1 and/or the SRB2 in the SDT mode, the terminal camps in the serving cell and the data on the SRB1 and/or the SRB2 is transmitted in the SDT mode; or,
in case that the association information is that a neighboring cell of a serving cell where a terminal camps supports transmitting the data on the SRB 1 and/or the SRB2 in the SDT mode, determining the neighboring cell of the serving cell as a target cell of the terminal for cell reselection.

In an embodiment, the data on the SRB1 is transmitted in the SDT mode includes:
in case that the terminal satisfies a first given condition, the data on the SRB 1 is transmitted in the SDT mode,
where the first given condition includes one or more of the followings:
   the terminal performs minimization of drive test (MDT) information reporting;
   the terminal performs measurement result reporting; and
   SRB 1 signaling data to be transmitted by the terminal is less than or equal to a threshold of SRB 1 signaling data preconfigured by the network device.

In an embodiment, the data on the SRB2 is transmitted in the SDT mode includes:
in case that the terminal satisfies a second given condition, the data on the SRB2 is transmitted in the SDT mode,
where the second given condition includes one or more of the followings:
   the terminal performs positioning information reporting;
   the terminal performs tracking area update (TAU);
   the terminal performs signaling deregistration; and
   SRB2 signaling data to be transmitted by the terminal is less than or equal to a threshold of the SRB2 signaling data preconfigured by the network device.

In an embodiment, the indication message is transmitted by a broadcast message or dedicated signaling.

In an embodiment, the association information includes one or more of the followings:
whether the serving cell where the terminal camps supports transmitting the data on the SRB 1 and/or the SRB2 in the SDT mode;
whether the neighboring cell of the serving cell where the terminal camps supports transmitting the data on the SRB 1 and/or the SRB2 in the SDT mode;
transmission configuration for transmitting the data on the SRB 1 and/or the SRB2 in the SDT mode; and
service scenarios of transmitting the data on the SRB 1 and/or the SRB2 in the SDT mode.

In an embodiment, the transmission configuration includes one or more of the followings:
a threshold of signaling data for transmission; and
resources corresponding to transmission, where the resources include configuration grant (CG) resources or random access (RA) resources.

In an embodiment, the service scenarios of transmitting the data on the SRB2 in the SDT mode include one or more of: positioning information reporting, TAU, and deregistration.

In an embodiment, the determining whether to transmit the data on the SRB 1 and/or the SRB2 in the SDT mode based on the indication message includes:
in case that the association information includes that an associated cell of the terminal supports transmitting the data on the SRB 1 and/or the SRB2, the transmission configuration and the service scenarios in the SDT mode, selecting corresponding resources from the transmission configuration based on a service scenario triggered by the terminal, and transmitting the data on the SRB 1 and/or the SRB2 in the SDT mode over the selected resources, where the associated cell is the serving cell where the terminal camps or a neighboring cell of the serving cell.

In an embodiment, the transmitting the data on the SRB 1 and/or the SRB2 in the SDT mode over the selected resources includes:
in case that periodic CG resources are selected, the SDT mode is used on the periodic CG resources to perform one or more of followings:
periodic measurement report reporting on the SRB 1;
periodic MDT reporting on the SRB 1; and
periodic positioning information transmission on the SRB2; and
in case that RA resources or one-time CG resources are selected, the SDT mode is used to perform TAU or signaling deregistration on the SRB2.

In an embodiment, the method further includes:
in case that it is determined based on the association information that the associated cell of the terminal supports transmitting the data on the SRB1 and/or the SRB2 in the SDT mode, transmitting auxiliary information to the network device, where the auxiliary information is used to indicate whether the terminal supports transmitting the data on the SRB1 and/or the SRB2 in the SDT mode, and the associated cell is a serving cell where the terminal camps or a neighboring cell of the serving cell; and
receiving the transmission configuration for transmitting the data on the SRB1 and/or the SRB2 in the SDT mode transmitted from the network device.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

An embodiment of the present application further provides a method for data transmission, including:
determining association information of transmitting data on a signaling radio bearer 1 (SRB 1) and/or a signaling radio bearer 2 (SRB2) in a small data transmission (SDT) mode; and
transmitting an indication message to a terminal, where the indication message includes the association information.

In an embodiment, the association information includes transmission configuration;
the determining the association information of transmitting the data on the SRB 1 and/or the SRB2 in the SDT mode, includes:
receiving auxiliary information transmitted from the terminal, where the auxiliary information is used to indicate whether the terminal uses the SDT mode to transmit data on the SRB1 and/or the SRB2; and
in case that it is determined that the terminal supports transmitting the data on the SRB1 and/or the SRB2 in the SDT mode, the transmission configuration for transmitting the data on the SRB 1 and/or the SRB2 in the SDT mode is determined.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

An embodiment of the present application further provides a terminal, including:
a memory;
a transceiver; and
a processor,
where the memory is used to store a computer program;
the transceiver is used to transmit and receive data under a control of the processor; and
the processor is used to read the computer program in the memory and causes the terminal to execute the method according the embodiments of the present application.

An embodiment of the present application further provides a network device, including:
a memory;
a transceiver; and
a processor,
where the memory is used to store a computer program;
the transceiver is used to transmit and receive data under a control of the processor; and
the processor is used to read the computer program in the memory and causes the network device to execute the method according to the embodiments of the present application.

An embodiment of the present application further provides an apparatus for data transmission, applied to a terminal, including:
a receiving module, used for receiving an indication message transmitted from a network device, where the indication message includes association information of a signaling radio bearer 1 (SRB1) and/or a signaling radio bearer 2 (SRB2); and
a determining module, used for determining whether to transmit data on the SRB 1 and/or the SRB2 in a small data transmission (SDT) mode based on the indication message.

An embodiment of the present application further provides an apparatus for data transmission, applied to a network device, including:
a determining module, used for determining association information of transmitting data on a signaling radio bearer 1 (SRB 1) and/or a signaling radio bearer 2 (SRB2) in a small data transmission (SDT) mode; and
a transmitting module, used for transmitting an indication message to a terminal, where the indication message includes the association information.

An embodiment of the present application further provides a processor-readable storage medium storing a computer program that causes, when executed by a processor, the processor to perform methods of the embodiments of the present application.

In the methods and apparatuses for data transmission and the storage medium provided by embodiments of the present application, by receiving the indication message transmitted from the network device, where the indication message includes the association information of the SRB 1 and/or the SRB2, the terminal can determine whether to transmit the data on the SRB 1 and/or the SRB2 in the SDT mode based on the indication message, thereby solving the problem of increasing transmission delay caused by the terminal cannot determine whether to transmit data on the SRB 1 and/or the SRB2 in the SDT mode.

### BRIEF DESCRIPTION OF THE DRAWINGS

In order to clearly illustrate the solutions of the embodiments according to the present application, the accompanying drawings used in the description of the embodiments are briefly introduced below. It should be noted that the drawings in the following description are only some embodiments of the present application. For those of ordinary skill in the art, other drawings can be obtained according to these drawings without creative effort.
FIG. 1 is a schematic flowchart showing steps of a method for data transmission applied to a terminal according to an embodiment of the present application;
FIG. 2 is a schematic flowchart showing steps of a method for data transmission applied to a network device according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a schematic module block diagram of an apparatus for data transmission applied to a terminal according to an embodiment of the present application; and
FIG. 6 is a schematic module block diagram of an apparatus for data transmission applied to a network device according to an embodiment of the present application.

### DETAILED DESCRIPTION

The term "and/or" in embodiments of the present application describes an association relationship of an associated object, and indicates that there can be three kinds of relationships. For example, A and/or B, it can indicate three cases: A exists alone, A and B exist simultaneously, and B exists alone. The character "/" generally indicates that associated objects have an "or" relationship.

The term "multiple" in embodiments of the present application refers to two or more, and other quantifiers are similar.

Furthermore, it should be noted that the term "an embodiment" or "one embodiment" mentioned throughout the description means that a particular feature, structure or characteristic associated with the embodiment is included in at least one embodiment of the present application. Therefore, the phrases "in an embodiment" or "in one embodiment" appearing throughout the description do not necessarily refer to the same embodiment. Furthermore, these specific features, structures or characteristics may be combined in any suitable manner in one or more embodiments.

In various embodiments of the present application, it should be understood that the sequence numbers of the following processes do not mean the order of execution, and the execution order of each process should be determined by its functions and internal logic, and should not constitute any limitation to the implementation of the present application.

In embodiments provided in the present application, it should be understood that "B corresponding to A" means that B is associated with A, and B can be determined based on A. However, it should also be understood that determining B based on A does not mean determining B only based on A, and B may also be determined based on A and/or other information.

The solutions of the embodiments of the present application are clearly and completely described below in combination with the accompanying drawings of the embodiments of the present application. The embodiments described are a part of the embodiments of the present application, rather than all the embodiments. Based on the embodiments of the present application, all other embodiments obtained by those of ordinary skill in the art without creative labor are within the scope of the protection of the present application.

How to transmit small data packet in an inactive state is being discussed in new radio (NR). The discussion includes using radio resource control (RRC) signaling to transmit the small data packet, and not using RRC signaling (i.e. w/o RRC signaling) to transmit the small data packet. Using RRC signaling to transmit the small data packet is that an *RRC Resume Request* message is transmitted to the network side together with the to-be-transmitted small data packet, to trigger subsequent procedures.

The small data packet transmitted in the inactive state may be control plane signaling, such as RRC messages including non-access-stratum (NAS) messages (such as *uplink (UL) Information Transfer* message), or pure RRC signaling (such as *measurement report* message).

Some services transmitted in the inactive state need a terminal to enter a connected state through a random access procedure, resulting in more signaling overhead and resource consumption. In order to reduce signaling overhead and power consumption of the terminal, small data transmission (SDT) can be used to transmit data on a signaling radio bearer 1 (SRB 1) and/or a signaling radio bearer 2 (SRB2). However, the terminal cannot obtain whether a current serving cell supports transmitting the data on the SRB 1 and/or the SRB2 in the SDT mode, resulting in the terminal being unable to transmit the data on the SRB 1 and/or the SRB2 in the SDT mode, which leads to a problem of increasing transmission delay.

Embodiments of the present application provide methods and apparatuses for data transmission and a storage medium, to solve a problem of how the terminal transmits the data on the SRB 1 and/or the SRB2 in the SDT mode.

The methods and the apparatuses are based on the same conception. Since the principles of the methods and the apparatuses to solve the problems are similar, the implementation of the apparatuses and methods can be referred to each other, and the similar part is not repeated.

The solutions according to the embodiments of the present application can be applicable to various systems, for example, 5G systems. For example, the applicable systems can be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and can further include a core network part, such as an evolved packet system (EPS), a 5G system (5GS), and the like.

The terminal device in the embodiments of the present application can be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device can communicate with one or more core networks (CNs) via a radio access network (RAN), and the wireless terminal can be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application. Since the terminal device and other network devices (such as a core network device, an access network device (i.e. a base station)) together form a network being able to support communication, the terminal device can be regarded as a network device in the present application.

The network device in the embodiments of the present application can be a base station, and the base station can include multiple cells providing services for the terminal. Depending on a specific scenario, the base station may be called an access point, or a device communicating with a wireless terminal device through one or more sectors on the air interface in the access network, or other names. The network device can be used for exchanging received air frames with internet protocol (IP) packets, and acting as a router between the wireless terminal device and the rest of the access network, where the rest of the access network can include an IP communication network. The network device can also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional node B (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

One or more antennas can be used between network devices and terminal devices for multi input multi output (MIMO) transmission. The MIMO transmission can be single user MIMO (SU-MIMO) or multi-user MIMO (MU-MIMO). Based on shapes and numbers of root antenna combinations, MIMO transmission can be 2D-MIMO, 3D-MIMO, FD-MIMO, or massive-MIMO, or diversity transmission, precoding transmission, or beamforming transmission, etc.

The present application is specifically described below.

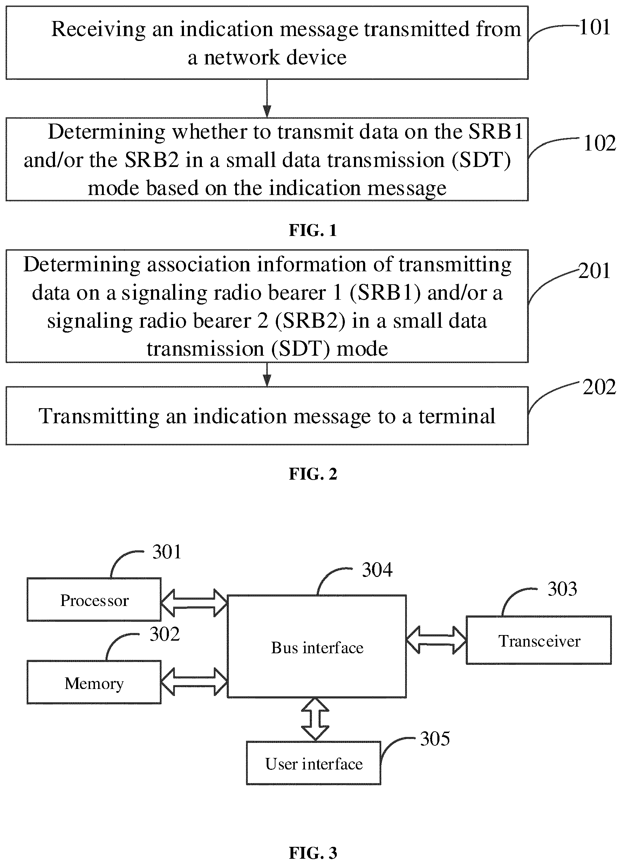

As shown in FIG. 1, it is a schematic flowchart showing steps of a method for data transmission applied to a terminal according to an embodiment of the present application, the method includes the following steps.

Step 101: receiving an indication message transmitted from a network device.

A terminal receives the indication message transmitted from the network device. The indication message includes association information of a signaling radio bearer 1 (SRB 1) and/or a signaling radio bearer 2 (SRB2).

That is, the indication message includes information related to SRB 1, or information related to SRB2, or information related to SRB 1 and SRB2.

Step 102: determining whether to transmit data on the SRB1 and/or the SRB2 in a small data transmission (SDT) mode based on the indication message.

Based on the indication message, the terminal determines whether to transmit data on the SRB 1 and/or the SRB2 in the SDT mode.

The terminal of this embodiment receives the indication message transmitted from the network device, where the indication message includes the association information of SRB 1 and/or SRB2, and determines whether to transmit the data on the SRB 1 and/or the SRB2 in the SDT mode based on the indication message. In an inactive state, in case that the terminal can transmit the data on the SRB1 and/or the SRB2 in the SDT mode, not only a problem of data transmission delay is solved, but also a purpose of saving terminal power consumption is achieved.

In this embodiment, when determining whether to transmit data on the SRB 1 and/or the SRB2 in the SDT mode based on the indication message, in case that the association information is that a serving cell of the terminal supports transmitting the data on the SRB 1 and/or the SRB2 in the SDT mode, the terminal camps in the serving cell and the data on the SRB 1 and/or the SRB2 is transmitted in the SDT mode; or, in case that the association information is that a neighboring cell of the serving cell of the terminal supports transmitting the data on the SRB 1 and/or the SRB2 in the SDT mode, determining the neighboring cell of the serving cell as a target cell of the terminal for cell reselection.

For example, in case that the association information is that the serving cell of the terminal supports transmitting the data on the SRB1 and/or the SRB2 in the SDT mode, the terminal determines that the serving cell of the terminal supports transmitting the data on the SRB 1 and/or the SRB2 in the SDT mode. For the terminal that needs to perform SDT on the SRB 1 and/or the SRB2, the terminal camps in the current serving cell and transmits the data on the SRB 1 and/or the SRB2 in the SDT mode.

In addition, in case that the association information is that the neighboring cell of the serving cell of the terminal supports transmitting the data on the SRB 1 and/or the SRB2 in the SDT mode, for the terminal that needs to perform SDT on the SRB 1 and/or the SRB2, the terminal may reselect to the neighboring cell, or the terminal may put the neighboring cell into a blacklist and not take the neighboring cell as a target of cell reselection, that is, the terminal does not reselect to the neighboring cell when performing cell reselection.

In an embodiment, the data on the SRB1 is transmitted in the SDT mode includes:
in case that the terminal satisfies a first given condition, the data on the SRB 1 is transmitted in the SDT mode,
where the first given condition includes one or more of the followings:
   the terminal performs minimization of drive test (MDT) information reporting;
   the terminal performs measurement result reporting; and
   SRB 1 signaling data to be transmitted by the terminal is less than or equal to a threshold of SRB 1 signaling data preconfigured by the network device.

That is, in case that at least one of the above conditions is satisfied, the terminal can transmit the data on the SRB 1 in the SDT mode.

In addition, when transmitting the data on the SRB2 in the SDT mode, in case that the terminal satisfies a second given condition, the data on the SRB2 is transmitted in the SDT mode,
where the second given condition includes one or more of the followings:
the terminal performs positioning information reporting;
the terminal performs tracking area update (TAU);
the terminal performs signaling deregistration; and
SRB2 signaling data to be transmitted by the terminal is less than or equal to a threshold of the SRB2 signaling data preconfigured by the network device.

That is, in case that at least one of the above conditions is satisfied, the terminal can transmit the data on the SRB2 in the SDT mode.

In this embodiment, the indication message is transmitted by a broadcast message or dedicated signaling.

For example, the dedicated signaling may be an *RRC release* message, and this is not specifically limited here.

In an embodiment, the association information includes one or more of the followings:
whether the serving cell where the terminal camps supports transmitting the data on the SRB 1 and/or the SRB2 in the SDT mode;
whether the neighboring cell of the serving cell where the terminal camps supports transmitting the data on the SRB 1 and/or the SRB2 in the SDT mode;
transmission configuration for transmitting the data on the SRB 1 and/or the SRB2 in the SDT mode; and
service scenarios of transmitting the data on the SRB 1 and/or the SRB2 in the SDT mode.

The terminal may determine whether the SDT mode can be used to transmit the data on the SRB 1 and/or the SRB2 in the serving cell by determining whether the serving cell of the terminal supports transmitting the data on the SRB1 and/or the SRB2 in the SDT mode; and/or the terminal may determine whether the SDT mode can be used to transmit the data on the SRB1 and/or the SRB2 in the neighboring cell by determining whether the neighboring cell of the serving cell of the terminal supports transmitting the data on the SRB 1 and/or the SRB2 in the SDT mode; and/or the terminal may determine to select which transmission configuration to transmit data on the SRB1 and/or the SRB2 in the SDT mode based on the transmission configuration; and/or the terminal may determine the SDT mode is used to transmit the data on the SRB 1 and/or the SRB2 under which condition based on service scenarios, so that the terminal may transmit the data on the SRB 1 and/or the SRB2 in the SDT mode.

The transmission configuration includes one or more of the followings:
a threshold of signaling data for transmission; and
resources corresponding to transmission, where the resources include configuration grant (CG) resources or random access (RA) resources.

For example, the CG resources include a period of the CG resource, a transport block size (TBS), a resource location, and master cell group (MCG) information, etc. The RA resources include physical random access channel (PRACH) resources corresponding to the SRB2, such as preamble or a random access channel occasion (RO) resource.

The service scenarios of transmitting the data on the SRB2 in the SDT mode include one or more of: positioning information reporting, TAU, and deregistration.

The determining whether to transmit the data on the SRB1 and/or the SRB2 in the SDT mode based on the indication message includes:
in case that the association information includes that an associated cell of the terminal supports transmitting the data on the SRB 1 and/or the SRB2, the transmission configuration and the service scenarios in the SDT mode, selecting corresponding resources from the transmission configuration based on a service scenario triggered by the terminal, and transmitting the data on the SRB 1 and/or the SRB2 in the SDT mode over the selected resources, where the associated cell is the serving cell where the terminal camps or a neighboring cell of the serving cell

For example, when transmitting the data on the SRB 1 and/or the SRB2 in the SDT mode over the selected resources, in case that periodic CG resources are selected, the SDT mode is used on the periodic CG resources to perform one or more of followings:
periodic measurement report reporting on the SRB 1;
periodic MDT reporting on the SRB 1; and
periodic positioning information transmission on the SRB2; and
in case that RA resources or one-time CG resources are selected, the SDT mode is used to perform TAU or signaling deregistration on the SRB2.

That is, the terminal can select periodic CG resources when performing periodic positioning information or measurement report reporting, and can select RA resources or one-time CG resources when performing TAU or signaling deregistration.

In an embodiment, in case that it is determined based on the association information that the associated cell of the terminal supports transmitting the data on the SRB1 and/or the SRB2 in the SDT mode, auxiliary information is transmitted to the network device. The auxiliary information is used to indicate whether the terminal supports transmitting the data on the SRB 1 and/or the SRB2 in the SDT mode, and the associated cell is the serving cell where the terminal camps or a neighboring cell of the serving cell. Then the transmission configuration for transmitting the data on the SRB 1 and/or the SRB2 in the SDT mode transmitted from the network device is received.

For example, when the terminal transmits the auxiliary information to the network device, the terminal may first receive a request message transmitted from the network device. The request message is used to request auxiliary information. Then the auxiliary information is transmitted to the network device based on the request message.

That is, the terminal may directly transmit the auxiliary information to the network device, or may transmit the auxiliary information based on the request of the network device, which is not specifically limited here.

It should also be noted that the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

For example, after the network device receives the auxiliary information transmitted from the terminal, the transmission configuration for transmitting the data on the SRB 1 and/or the SRB2 in the SDT mode may be transmitted to the terminal. The transmission configuration may be transmitted through an *RRC Release* message.

In the embodiment of the present application, by receiving the indication message transmitted from the network device, where the indication message includes the association information of the SRB1 and/or the SRB2, and determining whether to transmit the data on the SRB1 and/or the SRB2 in the SDT mode based on the indication message, the problem of increasing transmission delay caused by the terminal cannot determine whether to perform the SDT on the SRB 1 and/or the SRB2 is solved.

As shown in FIG. 2, it is a schematic flowchart showing steps of a method for data transmission applied to a network device according to an embodiment of the present application. The method includes the following steps.

Step 201: determining association information of transmitting data on a signaling radio bearer 1 (SRB 1) and/or a signaling radio bearer 2 (SRB2) in a small data transmission (SDT) mode.

For example, when the network device supports transmitting the data on the SRB 1 and/or the SRB2, the association information of transmitting the data on the SRB1 and/or the SRB2 in the SDT mode may be first determined, so that the terminal can transmit the data on the SRB 1 and/or the SRB2 in the SDT mode based on the association information.

Step 202: transmitting an indication message to a terminal.

The indication message includes the determined association information.

The indication message includes the association information, which enables the terminal to determine whether to transmit the data on the SRB1 and/or the SRB2 in the SDT mode based on the indication message, which solves the problem of increasing transmission delay caused by the terminal cannot determine whether to perform the SDT on the SRB1 and/or the SRB2.

In an embodiment, the association information includes transmission configuration;
when determining the association information of transmitting the data on the SRB1 and/or the SRB2 in the SDT mode, auxiliary information transmitted from the terminal may be received, where the auxiliary information is used to indicate whether the terminal uses the SDT mode to transmit data on the SRB1 and/or the SRB2; and in case that it is determined that the terminal supports transmitting the data on the SRB1 and/or the SRB2 in the SDT mode, the transmission configuration for transmitting the data on the SRB1 and/or the SRB2 in the SDT mode is determined.

In an embodiment, the indication message is transmitted by a broadcast message or dedicated signaling.

In addition, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

It should be noted that, details about the above embodiments can be referred to associated contents on terminal side method, which are not repeated herein.

The present application is described below through embodiments.

### Embodiment one:

Step 1: a terminal receives an indication message transmitted from a network device, where the indication message includes association information of a signaling radio bearer 2 (SRB2), and the indication message may be a broadcast message, where the association information includes:
   whether a serving cell of the terminal supports transmitting the data on the SRB2 in a small data transmission (SDT) mode;
   whether a neighboring cell of the serving cell of the terminal supports transmitting the data on the SRB2 in the SDT mode;
   transmission configuration for transmitting the data on the SRB2 in the SDT mode, including an SRB2 signaling data threshold and resources corresponding to SRB2 for the SDT, such as configuration grant (CG) resources, random access (RA) resources, etc., where the CG resources include a period of the CG resource, a transport block size (TBS), a resource location, and master cell group (MCG) information, etc., and the RA resources include physical random access channel (PRACH) resources corresponding to the SRB2, such as preamble or a random access channel occasion (RO) resource corresponding to the SRB2; and
   service scenarios of transmitting the data on the SRB2 in the SDT mode, such as positioning information reporting, tracking area update (TAU) and deregistration, which can be described by adding a cause value.
Step 2-1: when the association information is that the serving cell of the terminal supports transmitting the data on the SRB2 in the SDT mode, performing SDT on the SRB2 based on the indication message.

For example, in case that the association information is that the serving cell of the terminal supports transmitting the data on the SRB2 in the SDT mode, and in case that the terminal has an SDT requirement, the terminal camps in the current serving cell, and selects the corresponding resource to perform the SDT on the SRB2 based on actual triggered service scenarios, for example:
service scenario 1: the terminal performs periodic positioning information reporting, for example, a cause value is periodic positioning reporting, and
the terminal selects periodic CG resources to perform the SDT on the SRB2; and
service scenario 2: the terminal performs TAU or deregistration, for example, a cause value is TAU or deregistration, and
the terminal triggers random access SDT (RA-SDT) or selects a one-time CG resource.

It should also be noted that the terminal may also select the preamble corresponding to the SRB2 to trigger RA-SDT; or, when the terminal is ready to transmit periodic SRB2, the terminal selects periodic CG resources to transmit the SRB2.

Step 2-2: in case that the association information is that the neighboring cell of the serving cell of the terminal supports transmitting the data on the SRB2 in the SDT mode, the terminal having a demand for performing SRB2 SDT may reselect to the neighboring cell, otherwise the terminal puts the neighboring cell into a blacklist and not take the neighboring cell as a target of cell reselection.

That is, when the terminal determines that the neighboring cell does not support the SRB2 SDT, the terminal does not reselect to the neighboring cell when performing cell reselection.

### Embodiment two:

Step 1: a terminal receives an indication message transmitted from a network device, where the indication message includes association information of a signaling radio bearer 2 (SRB2), and the indication message may be a dedicated message, such as an *RRC release* message, where the association information includes:
   transmission configuration for transmitting the data on the SRB2 in the SDT mode, including an SRB2 signaling data threshold and resources corresponding to SRB2 for small data transmission (SDT), such as configuration grant (CG) resources, random access (RA) resources, etc., where the CG resources include a period of the CG resource, a transport block size (TBS), a resource location, and master cell group (MCG) information, etc., and the RA resources include physical random access channel (PRACH) resources corresponding to the SRB2, such as preamble or a random access channel occasion (RO) resource; and
   service scenarios of transmitting the data on the SRB2 in the SDT mode, such as positioning information reporting, tracking area update (TAU) and deregistration, which can be described by adding a cause value.
Step 2-1 and step 2-2 are the same as step 2-1 and step 2-2 in embodiment one, which are not repeated herein.

### Embodiment three:

Step 1: a terminal reads an indication message, and determines that a network device supports small data transmission (SDT) on a signaling radio bearer 2 (SRB2).
Step 2: the network device requests the terminal to report auxiliary information of the SDT on the SRB2.
Step 3: the terminal reports the auxiliary information of the SDT on the SRB2. In an embodiment, the auxiliary information can be reported directly after step 1 or based on the request of step 2.

For example, the auxiliary information reported by the terminal includes:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT, where the sizes of data packets may include estimated data of SRB2 and small data transmission data radio bearer (SDT DRB);
service scenarios supporting SDT, including positioning information reporting, TAU, and deregistration, etc.

Step 4: after receiving the auxiliary information reported by the terminal, the network device transmits transmission configuration to the terminal. In an embodiment, the transmission configuration can be transmitted through an *RRC Release* message.

By any of the above embodiments, the terminal can determine how to perform the STD procedure of SRB2.

### Embodiment four:

Step 1: a terminal receives an indication message transmitted from a network device, where the indication message includes association information of a signaling radio bearer 1 (SRB1), and the indication message may be a broadcast message, where the association information includes:
   whether a serving cell of the terminal supports transmitting the data on the SRB 1 in a small data transmission (SDT) mode;
   whether a neighboring cell of the serving cell of the terminal supports transmitting the data on the SRB1 in the SDT mode;
   transmission configuration for transmitting the data on the SRB 1 in the SDT mode, including an SRB 1 signaling data threshold and resources corresponding to SRB 1 for the SDT, such as configuration grant (CG) resources, random access (RA) resources, etc., where the CG resources include a period of the CG resource, a transport block size (TBS), a resource location, and master cell group (MCG) information, etc., and the RA resources include physical random access channel (PRACH) resources corresponding to the SRB1, such as preamble or a random access channel occasion (RO) resource corresponding to the SRB 1; and
   service scenarios of transmitting the data on the SRB1 in the SDT mode, for example, the terminal performs minimization of drive test (MDT) information reporting, or the terminal performs measurement result reporting.
Step 2-1: when the association information is that the serving cell of the terminal supports transmitting the data on the SRB 1 in the SDT mode, performing SDT on the SRB 1 based on the indication message.

For example, in case that the association information is that the serving cell of the terminal supports transmitting the data on the SRB 1 in the SDT mode, in case that the terminal has an SDT requirement, the terminal camps in the current serving cell, and selects the corresponding resource to perform the SDT on the SRB 1 based on actual triggered service scenarios, for example:
service scenario 1: the terminal performs periodic positioning information reporting, for example, a cause value is periodic measurement reporting, or periodic MDT reporting, and
the terminal selects periodic CG resources to perform the SDT on the SRB 1; and
service scenario 2: the terminal performs event MDT reporting, or event measurement reporting, and
the terminal triggers random access SDT (RA-SDT) or selects a one-time CG resource.

It should also be noted that the terminal may also select the preamble corresponding to the SRB1 to trigger RA-SDT; or, when the terminal is ready to transmit periodic SRB1, the terminal selects periodic CG resources to transmit the SRB 1.

Step 2-2: in case that the association information is that the neighboring cell of the serving cell of the terminal supports transmitting the data on the SRB 1 in the SDT mode, the terminal having a demand for performing SRB 1 SDT may reselect to the neighboring cell, otherwise the terminal puts the neighboring cell into a blacklist and not take the neighboring cell as a target of cell reselection.

That is, when the terminal determines that the neighboring cell does not support the SRB 1 SDT, the terminal does not reselect to the neighboring cell when performing cell reselection.

FIG. 3 is a schematic structural diagram of a terminal according to an embodiment of the present application. As shown in FIG. 3, a terminal 300 includes a memory 302, a transceiver 303 and a processor 301, where the processor 301 and the memory 302 may also be physically separated.

The memory 302 is used for storing computer programs; the transceiver 303 is used for receiving and transmitting data under the control of the processor 301.

In FIG. 3, a bus system 304 may include any number of interconnected buses and bridges, linked together by various circuits of one or more processors represented by processor 301 and circuits of memories represented by memory 302. The bus system 304 may also link various other circuits such as peripheral devices, regulators and power management circuits. The bus interface provides an interface. The transceiver 303 may be multiple components, that is, including a transmitter and a receiver, providing units for communication with various other devices on transmission media such as wireless channels, wired channels, optical fibers, etc. For different user devices, the user interface 305 may also be an interface capable of connecting external and internal devices, including but not limited to small keyboards, displays, speakers, microphones, joysticks, etc.

The processor 301 is used for managing the bus architecture and general processing. The memory 302 may store data used by the processor 301 in case of performing operations.

In an embodiment, the processor 301 may be a central processing unit (CPU), an application specific integrated circuit (ASIC), a field-programmable gate array (FPGA), or a complex programmable logic device (CPLD). The processor 301 may also adopt a multi-core architecture.

The processor 301 is used for reading the computer program in the memory 302 and executing any of the method provided by the embodiments in the application according to obtained executable instructions. For example:
receiving an indication message transmitted from a network device, where the indication message includes association information of a signaling radio bearer 1 (SRB 1) and/or a signaling radio bearer 2 (SRB2); and
determining whether to transmit data on the SRB1 and/or the SRB2 in a small data transmission (SDT) mode based on the indication message.

In an embodiment, the determining whether to transmit the data on the SRB1 and/or the SRB2 in the SDT mode based on the indication message includes:
in case that the association information is that a serving cell where the terminal camps supports transmitting the data on the SRB 1 and/or the SRB2 in the SDT mode, the terminal camps in the serving cell and the data on the SRB1 and/or the SRB2 is transmitted in the SDT mode; or
in case that the association information is that a neighboring cell of a serving cell where the terminal camps supports transmitting the data on the SRB1 and/or the SRB2 in the SDT mode, determining the neighboring cell of the serving cell as a target cell of the terminal for cell reselection.

In an embodiment, the data on the SRB1 is transmitted in the SDT mode includes:
in case that the terminal satisfies a first given condition, the data on the SRB 1 is transmitted in the SDT mode,
where the first given condition includes one or more of the followings:
   the terminal performs minimization of drive test (MDT) information reporting;
   the terminal performs measurement result reporting; and
   SRB 1 signaling data to be transmitted by the terminal is less than or equal to a threshold of SRB 1 signaling data preconfigured by the network device.

In an embodiment, the data on the SRB2 is transmitted in the SDT mode includes:
in case that the terminal satisfies a second given condition, the data on the SRB2 is transmitted in the SDT mode,
where the second given condition includes one or more of the followings:
   the terminal performs positioning information reporting;
   the terminal performs tracking area update (TAU);
   the terminal performs signaling deregistration; and
   SRB2 signaling data to be transmitted by the terminal is less than or equal to a threshold of the SRB2 signaling data preconfigured by the network device.

In an embodiment, the indication message is transmitted by a broadcast message or dedicated signaling.

In an embodiment, the association information includes one or more of the followings:
whether the serving cell where the terminal camps supports transmitting the data on the SRB 1 and/or the SRB2 in the SDT mode;
whether the neighboring cell of the serving cell where the terminal camps supports transmitting the data on the SRB1 and/or the SRB2 in the SDT mode;
transmission configuration for transmitting the data on the SRB 1 and/or the SRB2 in the SDT mode; and
service scenarios of transmitting the data on the SRB 1 and/or the SRB2 in the SDT mode.

In an embodiment, the transmission configuration includes one or more of the followings:
a threshold of signaling data for transmission; and
resources corresponding to transmission, where the resources include configuration grant (CG) resources or random access (RA) resources.

In an embodiment, the service scenarios of transmitting the data on the SRB2 in the SDT mode include one or more of: positioning information reporting, TAU, and deregistration.

In an embodiment, the determining whether to transmit the data on the SRB 1 and/or the SRB2 in the SDT mode based on the indication message includes:
in case that the association information includes that an associated cell of the terminal supports transmitting the data on the SRB 1 and/or the SRB2, the transmission configuration and the service scenarios in the SDT mode, selecting corresponding resources from the transmission configuration based on a service scenarios triggered by the terminal, and transmitting the data on the SRB 1 and/or the SRB2 in the SDT mode over the selected resources, where the associated cell is the serving cell where the terminal camps or a neighboring cell of the serving cell.

In an embodiment, the transmitting the data on the SRB 1 and/or the SRB2 in the SDT mode over the selected resources includes:
in case that periodic CG resources are selected, the SDT mode is used on the periodic CG resources to perform one or more of followings:
periodic measurement report reporting on the SRB 1;
periodic MDT reporting on the SRB 1; and
periodic positioning information transmission on the SRB2; and
in case that RA resources or one-time CG resources are selected, the SDT mode is used to perform TAU or signaling deregistration on the SRB2.

In an embodiment, the processor 301 is further used for:
in case that it is determined based on the association information that the associated cell of the terminal supports transmitting the data on the SRB1 and/or the SRB2 in the SDT mode, transmitting auxiliary information to the network device, where the auxiliary information is used to indicate whether the terminal supports transmitting the data on the SRB1 and/or the SRB2 in the SDT mode, and the associated cell is a serving cell where the terminal camps or a neighboring cell of the serving cell; and
receiving the transmission configuration for transmitting the data on the SRB1 and/or the SRB2 in the SDT mode transmitted from the network device.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

It should be noted here that the above embodiments can achieve all the method steps and effects of the terminal-side method embodiments, and the same parts and effects in this embodiment as the terminal side method embodiments will not be repeated here.

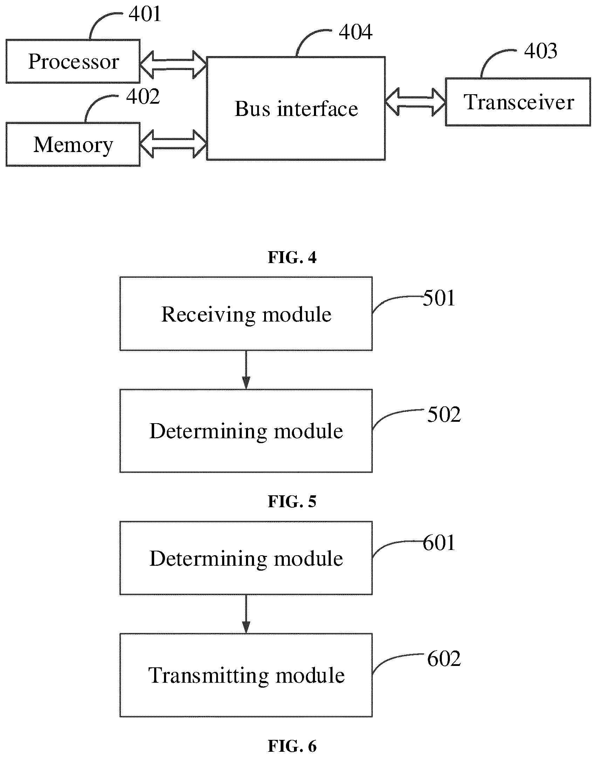

FIG. 4 is a schematic structural diagram of a network device according to an embodiment of the present application. As shown in FIG. 4, a network device 400 includes a memory 402, a transceiver 403 and a processor 401, where the processor 401 and the memory 402 may also be physically separated.

The memory 402 is used for storing computer programs; and the transceiver 403 is used for receiving and transmitting data under the control of the processor 401.

In FIG. 4, a bus system 404 may include any number of interconnected buses and bridges, linked together by various circuits of one or more processors represented by processor 401 and circuits of memories represented by memory 402. The bus system 404 may also link various other circuits such as peripheral devices, regulators and power management circuits. The bus interface provides an interface. The transceiver 403 may be multiple components, that is, including a transmitter and a receiver, providing units for communication with various other devices on transmission media such as wireless channels, wired channels, optical fibers, etc. The processor 401 is used for managing the bus architecture and general processing. The memory 402 may store data used by the processor 401 in a case that performing operations.

The processor 401 may be a central processing unit (CPU), an application specific integrated circuit (ASIC), a field-programmable gate array (FPGA), or a complex programmable logic device (CPLD). The processor 401 may also adopt a multi-core architecture.

The processor 401 is used for reading the computer program in the memory 402 and executing any of the method provided by the embodiments in the application according to obtained executable instructions. For example:
determining association information of transmitting data on a signaling radio bearer 1 (SRB 1) and/or a signaling radio bearer 2 (SRB2) in a small data transmission (SDT) mode; and
transmitting an indication message to a terminal, where the indication message includes the association information.

In an embodiment, the association information includes transmission configuration;
the determining the association information of transmitting the data on the SRB 1 and/or the SRB2 in the SDT mode, includes:
receiving auxiliary information transmitted from the terminal, where the auxiliary information is used to indicate whether the terminal uses the SDT mode to transmit data on the SRB1 and/or the SRB2; and
in case that it is determined that the terminal supports transmitting the data on the SRB1 and/or the SRB2 in the SDT mode, the transmission configuration for transmitting the data on the SRB 1 and/or the SRB2 in the SDT mode is determined.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

It should be noted here that the above-mentioned terminal and network device provided by the embodiments of the present application can perform all the method steps performed by the above-mentioned method embodiments, and can achieve the same effect. The parts and effects in this embodiment that are the same as those in the method embodiment will not be described in detail here.

FIG. 5 is a schematic module block diagram of an apparatus for data transmission applied to a terminal according to an embodiment of the present application, includes:
a receiving module 501, used for receiving an indication message transmitted from a network device, where the indication message includes association information of a signaling radio bearer 1 (SRB1) and/or a signaling radio bearer 2 (SRB2); and
a determining module 502, used for determining whether to transmit data on the SRB 1 and/or the SRB2 in a small data transmission (SDT) mode based on the indication message.

In an embodiment, the determining whether to transmit the data on the SRB 1 and/or the SRB2 in the SDT mode based on the indication message includes:
in case that the association information is that a serving cell where the terminal camps supports transmitting the data on the SRB 1 and/or the SRB2 in the SDT mode, the terminal camps in the serving cell and the data on the SRB1 and/or the SRB2 is transmitted in the SDT mode; or
in case that the association information is that a neighboring cell of a serving cell where the terminal camps supports transmitting the data on the SRB 1 and/or the SRB2 in the SDT mode, determining the neighboring cell of the serving cell as a target cell of the terminal for cell reselection.

In an embodiment, the data on the SRB1 is transmitted in the SDT mode includes:
in case that the terminal satisfies a first given condition, the data on the SRB 1 is transmitted in the SDT mode,
where the first given condition includes one or more of the followings:
   the terminal performs minimization of drive test (MDT) information reporting;
   the terminal performs measurement result reporting; and
   SRB 1 signaling data to be transmitted by the terminal is less than or equal to a threshold of SRB 1 signaling data preconfigured by the network device.

In an embodiment, the data on the SRB2 is transmitted in the SDT mode includes:
in case that the terminal satisfies a second given condition, the data on the SRB2 is transmitted in the SDT mode,
where the second given condition includes one or more of the followings:
   the terminal performs positioning information reporting;
   the terminal performs tracking area update (TAU);
   the terminal performs signaling deregistration; and
   SRB2 signaling data to be transmitted by the terminal is less than or equal to a threshold of the SRB2 signaling data preconfigured by the network device.

In an embodiment, the indication message is transmitted by a broadcast message or dedicated signaling.

In an embodiment, the association information includes one or more of the followings:
whether the serving cell where the terminal camps supports transmitting the data on the SRB 1 and/or the SRB2 in the SDT mode;
whether the neighboring cell of the serving cell where the terminal camps supports transmitting the data on the SRB 1 and/or the SRB2 in the SDT mode;
transmission configuration for transmitting the data on the SRB 1 and/or the SRB2 in the SDT mode; and
service scenarios of transmitting the data on the SRB 1 and/or the SRB2 in the SDT mode.

In an embodiment, the transmission configuration includes one or more of the followings:
a threshold of signaling data for transmission; and
resources corresponding to transmission, where the resources include configuration grant (CG) resources or random access (RA) resources.

In an embodiment, the service scenarios of transmitting the data on the SRB2 in the SDT mode include one or more of: positioning information reporting, TAU, and deregistration.

In an embodiment, the determining whether to transmit the data on the SRB 1 and/or the SRB2 in the SDT mode based on the indication message includes:
in case that the association information includes that an associated cell of the terminal supports transmitting the data on the SRB 1 and/or the SRB2, the transmission configuration and the service scenarios in the SDT mode, selecting corresponding resources from the transmission configuration based on a service scenario triggered by the terminal, and transmitting the data on the SRB1 and/or the SRB2 in the SDT mode over the selected resources, where the associated cell is the serving cell where the terminal camps or a neighboring cell of the serving cell.

In an embodiment, the transmitting the data on the SRB1 and/or the SRB2 in the SDT mode over the selected resources includes:
in case that periodic CG resources are selected, the SDT mode is used on the periodic CG resources to perform one or more of followings:
periodic measurement report reporting on the SRB 1;
periodic MDT reporting on the SRB 1; and
periodic positioning information transmission on the SRB2; and
in case that RA resources or one-time CG resources are selected, the SDT mode is used to perform TAU or signaling deregistration on the SRB2.

In an embodiment, the apparatus further includes a transmitting module, used for:
in case that it is determined based on the association information that the associated cell of the terminal supports transmitting the data on the SRB1 and/or the SRB2 in the SDT mode, transmitting auxiliary information to the network device, where the auxiliary information is used to indicate whether the terminal supports transmitting the data on the SRB1 and/or the SRB2 in the SDT mode, and the associated cell is a serving cell where the terminal camps or a neighboring cell of the serving cell; and
receiving the transmission configuration for transmitting the data on the SRB1 and/or the SRB2 in the SDT mode transmitted from the network device.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

FIG. 6 is a schematic module block diagram of an apparatus for data transmission applied to a network device according to an embodiment of the present application, includes:
a determining module 601, used for determining association information of transmitting data on a signaling radio bearer 1 (SRB1) and/or a signaling radio bearer 2 (SRB2) in a small data transmission (SDT) mode; and
a transmitting module 602, used for transmitting an indication message to a terminal, where the indication message includes the association information.

In an embodiment, the association information includes transmission configuration;
the determining the association information of transmitting the data on the SRB 1 and/or the SRB2 in the SDT mode, includes:
receiving auxiliary information transmitted from the terminal, where the auxiliary information is used to indicate whether the terminal uses the SDT mode to transmit data on the SRB1 and/or the SRB2; and
in case that it is determined that the terminal supports transmitting the data on the SRB 1 and/or the SRB2 in the SDT mode, the transmission configuration for transmitting the data on the SRB 1 and/or the SRB2 transmitted in the SDT mode is determined.

In an embodiment, the auxiliary information includes one or more of the followings:
an indicator of performing data transmission on the SRB 1 and/or the SRB2 in the SDT mode in a radio resource control (RRC) inactive state or idle state;
a period of positioning information notified by a non-access stratum (NAS);
an estimated size of a data packet of the positioning information notified by the NAS;
sizes of data packets supporting SDT; and
service scenarios supporting SDT.

It should be noted that, the division of units/modules in the embodiments of the present application is schematic, and is only a logical function division, and there can be other division manners in actual implementation. In an embodiment, the functional units in the various embodiments of the present application can be integrated into one processing unit, or each unit can exist alone physically, or two or more units can be integrated into one unit. The aforementioned integrated unit can be implemented in the form of hardware or software functional unit.

In the case that the integrated unit is implemented in the form of a software functional unit and sold or used as an independent product, it can be stored in a computer readable storage medium. Based on such understanding, the solutions of the present application in essence or a part of the solutions that contributes to the related art, or all or part of the solutions, can be embodied in the form of a software product, which is stored in a storage medium, including several instructions to cause a computer device (which can be a personal computer, server, or network device, etc.) or a processor to perform all or part of the steps of the methods described in the respective embodiments of the present application. The storage medium described above includes various media that can store program codes, such as USB flash disk, mobile hard disk, read-only memory (ROM), random access memory (RAM), magnetic disk, or optical disk.

It should be noted that, the apparatus in the embodiments of the application can implement all the methods provided by the above method embodiments and achieve the same technical effects. The same parts and beneficial effects as the method embodiments are not repeated.

In some embodiments, embodiments of the present application further provides a non-transitory computer readable storage medium storing computer programs that cause a processor to perform the methods in the above embodiments.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These computer-executable instructions may be stored in computer-readable memory capable of directing a computer or other programmable data processing apparatus to operate in a particular manner, and the instructions stored in the computer-readable memory may result in a manufacture including instruction means, the instruction means can perform the functions specified in one or more flows of the flowchart and/or one or more blocks of the block diagram.

These computer-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations can be made in the present application without departing from the scope of the present application. Thus, provided that these modifications and variations of the present application are within the scope of the claims of the present application and their equivalents, the present application is also intended to cover such modifications and variations.

## Claims

1. A method for data transmission, applied to a terminal, comprising:
receiving an indication message transmitted from a network device, wherein the indication message comprises association information of a signaling radio bearer 1, SRB 1, and/or a signaling radio bearer 2, SRB2; and
determining whether to transmit data on the SRB1 and/or the SRB2 in a small data transmission, SDT, mode based on the indication message.

2. The method of claim 1, wherein the determining whether to transmit the data on the SRB 1 and/or the SRB2 in the SDT mode based on the indication message comprises:
in case that the association information is that a serving cell where the terminal camps supports transmitting the data on the SRB 1 and/or the SRB2 in the SDT mode, the terminal camps in the serving cell and the data on the SRB 1 and/or the SRB2 is transmitted in the SDT mode; or
in case that the association information is that a neighboring cell of a serving cell where the terminal camps supports transmitting the data on the SRB1 and/or the SRB2 in the SDT mode, determining the neighboring cell of the serving cell as a target cell of the terminal for cell reselection.

3. The method of claim 2, wherein the data on the SRB1 is transmitted in the SDT mode comprises:
in case that the terminal satisfies a first given condition, the data on the SRB 1 is transmitted in the SDT mode,
wherein the first given condition comprises one or more of the followings:
the terminal performs minimization of drive test, MDT, information reporting;
the terminal performs measurement result reporting; and
SRB 1 signaling data to be transmitted by the terminal is less than or equal to a threshold of SRB 1 signaling data preconfigured by the network device.

4. The method of claim 2, wherein the data on the SRB2 is transmitted in the SDT mode comprises:
in case that the terminal satisfies a second given condition, the data on the SRB2 is transmitted in the SDT mode,
wherein the second given condition comprises one or more of the followings:
the terminal performs positioning information reporting;
the terminal performs tracking area update, TAU;
the terminal performs signaling deregistration; and
SRB2 signaling data to be transmitted by the terminal is less than or equal to a threshold of the SRB2 signaling data preconfigured by the network device.

5. The method of claim 1, wherein the indication message is transmitted by a broadcast message or dedicated signaling.

6. The method of claim 1, wherein the association information comprises one or more of the followings:
whether a serving cell where the terminal camps supports transmitting the data on the SRB 1 and/or the SRB2 in the SDT mode;
whether a neighboring cell of the serving cell where the terminal camps supports transmitting the data on the SRB1 and/or the SRB2 in the SDT mode;
transmission configuration for transmitting the data on the SRB1 and/or the SRB2 in the SDT mode; and
service scenarios of transmitting the data on the SRB 1 and/or the SRB2 in the SDT mode.

7. The method of claim 6, wherein the transmission configuration comprises one or more of the followings:
a threshold of signaling data for transmission; and
resources corresponding to transmission, wherein the resources comprise configuration grant, CG, resources or random access, RA, resources.

8. The method of claim 6, wherein the service scenarios of transmitting the data on the SRB2 in the SDT mode comprise one or more of: positioning information reporting, tracking area update, TAU, and deregistration.

9. The method of claim 6, wherein the determining whether to transmit the data on the SRB 1 and/or the SRB2 in the SDT mode based on the indication message comprises:
in case that the association information comprises that an associated cell of the terminal supports transmitting the data on the SRB 1 and/or the SRB2, the transmission configuration and the service scenarios in the SDT mode, selecting corresponding resources from the transmission configuration based on a service scenario triggered by the terminal, and transmitting the data on the SRB1 and/or the SRB2 in the SDT mode over the selected resources, wherein the associated cell is the serving cell where the terminal camps or the neighboring cell of the serving cell.

10. The method of claim 9, wherein the transmitting the data on the SRB1 and/or the SRB2 in the SDT mode over the selected resources comprises:
in case that periodic configuration grant, CG, resources are selected, the SDT mode is used on the periodic CG resources to perform one or more of followings:
periodic measurement report reporting on the SRB 1;
periodic minimization of drive test, MDT, reporting on the SRB 1; and
periodic positioning information transmission on the SRB2; and
in case that random access, RA, resources or one-time CG resources are selected, the SDT mode is used to perform TAU or signaling deregistration on the SRB2.

11. The method of claim 1, further comprising:
in case that it is determined based on the association information that an associated cell of the terminal supports transmitting the data on the SRB1 and/or the SRB2 in the SDT mode, transmitting auxiliary information to the network device, wherein the auxiliary information is used to indicate whether the terminal supports transmitting the data on the SRB1 and/or the SRB2 in the SDT mode, and the associated cell is a serving cell where the terminal camps or a neighboring cell of the serving cell; and
receiving the transmission configuration for transmitting the data on the SRB1 and/or the SRB2 in the SDT mode transmitted from the network device.

12. The method of claim 11, wherein the auxiliary information comprises one or more of the followings:
an indicator of performing data transmission on the SRB 1 and/or the SRB2 in the SDT mode in a radio resource control, RRC, inactive state or idle state;
a period of positioning information notified by a non-access stratum, NAS;
an estimated size of a data packet of the positioning information notified by the NAS;
sizes of data packets supporting SDT; and
service scenarios supporting SDT.

13. A method for data transmission, applied to a network device, comprising:
determining association information of transmitting data on a signaling radio bearer 1, SRB 1, and/or a signaling radio bearer 2, SRB2, in a small data transmission, SDT, mode; and
transmitting an indication message to a terminal, wherein the indication message comprises the association information.

14. The method of claim 13, the association information comprises transmission configuration;
the determining the association information of transmitting the data on the SRB 1 and/or the SRB2 in the SDT mode, comprises:
receiving auxiliary information transmitted from the terminal, wherein the auxiliary information is used to indicate whether the terminal uses the SDT mode to transmit data on the SRB1 and/or the SRB2; and
in case that it is determined that the terminal supports transmitting the data on the SRB 1 and/or the SRB2 in the SDT mode, the transmission configuration for transmitting the data on the SRB 1 and/or the SRB2 in the SDT mode is determined.

15. The method of claim 14, wherein the auxiliary information comprises one or more of the followings:
an indicator of performing data transmission on the SRB 1 and/or the SRB2 in the SDT mode in a radio resource control, RRC, inactive state or idle state;
a period of positioning information notified by a non-access stratum, NAS;
an estimated size of a data packet of the positioning information notified by the NAS;
sizes of data packets supporting SDT; and
service scenarios supporting SDT.

16. A terminal, comprising:
a memory;
a transceiver; and
a processor,
wherein the memory is used to store a computer program;
the transceiver is used to transmit and receive data under a control of the processor; and
the processor is used to read the computer program in the memory and causes the terminal to execute the following operations of:
receiving an indication message transmitted from a network device, wherein the indication message comprises association information of a signaling radio bearer 1, SRB 1, and/or a signaling radio bearer 2, SRB2; and
determining whether to transmit data on the SRB1 and/or the SRB2 in a small data transmission, SDT, mode based on the indication message.

17. The terminal of claim 16, wherein the determining whether to transmit the data on the SRB1 and/or the SRB2 in the SDT mode based on the indication message comprises:
in case that the association information is that a serving cell where the terminal camps supports transmitting the data on the SRB1 and/or the SRB2 in the SDT mode, the terminal camps in the serving cell and the data on the SRB 1 and/or the SRB2 is transmitted in the SDT mode; or
in case that the association information is that a neighboring cell of a serving cell where the terminal camps supports transmitting the data on the SRB1 and/or the SRB2 in the SDT mode, determining the neighboring cell of the serving cell as a target cell of the terminal for cell reselection.

18. The terminal of claim 17, wherein the data on the SRB1 is transmitted in the SDT mode comprises:
in case that the terminal satisfies a first given condition, the data on the SRB 1 is transmitted in the SDT mode,
wherein the first given condition comprises one or more of the followings:
the terminal performs minimization of drive test, MDT, information reporting;
the terminal performs measurement result reporting; and
SRB 1 signaling data to be transmitted by the terminal is less than or equal to a threshold of SRB 1 signaling data preconfigured by the network device.

19. The terminal of claim 17, wherein the data on the SRB2 is transmitted in the SDT mode comprises:
in case that the terminal satisfies a second given condition, the data on the SRB2 is transmitted in the SDT mode,
wherein the second given condition comprises one or more of the followings:
the terminal performs positioning information reporting;
the terminal performs tracking area update, TAU;
the terminal performs signaling deregistration; and
SRB2 signaling data to be transmitted by the terminal is less than or equal to a threshold of the SRB2 signaling data preconfigured by the network device.

20. The terminal of claim 16, wherein the association information comprises one or more of the followings:
whether a serving cell where the terminal camps supports transmitting the data on the SRB 1 and/or the SRB2 in the SDT mode;
whether a neighboring cell of the serving cell where the terminal camps supports transmitting the data on the SRB1 and/or the SRB2 in the SDT mode;
transmission configuration for transmitting the data on the SRB 1 and/or the SRB2 in the SDT mode; and
service scenarios of transmitting the data on the SRB1 and/or the SRB2 in the SDT mode.

21. The terminal of claim 20, wherein the determining whether to transmit the data on the SRB1 and/or the SRB2 in the SDT mode based on the indication message comprises:
in case that the association information comprises that an associated cell of the terminal supports transmitting the data on the SRB 1 and/or the SRB2, the transmission configuration and the service scenarios in the SDT mode, selecting corresponding resources from the transmission configuration based on a service scenario triggered by the terminal, and transmitting the data on the SRB1 and/or the SRB2 in the SDT mode over the selected resources, wherein the associated cell is the serving cell where the terminal camps or the neighboring cell of the serving cell.

22. The terminal of claim 21, wherein the transmitting the data on the SRB 1 and/or the SRB2 in the SDT mode over the selected resources comprises:
in case that periodic configuration grant, CG, resources are selected, the SDT mode is used on the periodic CG resources to perform one or more of followings:
periodic measurement report reporting on the SRB 1;
periodic minimization of drive test, MDT, reporting on the SRB 1; and
periodic positioning information transmission on the SRB2; and
in case that random access, RA, resources or one-time CG resources are selected, the SDT mode is used to perform TAU or signaling deregistration on the SRB2.

23. A network device, comprising:
a memory;
a transceiver; and
a processor,
wherein the memory is used to store a computer program;
the transceiver is used to transmit and receive data under a control of the processor; and
the processor is used to read the computer program in the memory and causes the network device to execute the following operations of:
determining association information of transmitting data on a signaling radio bearer 1, SRB 1, and/or a signaling radio bearer 2, SRB2, in a small data transmission, SDT, mode; and
transmitting an indication message to a terminal, wherein the indication message comprises the association information.

24. The network device of claim 23, wherein the association information comprises transmission configuration;
the determining the association information of transmitting the data on the SRB 1 and/or the SRB2 in the SDT mode, comprises:
receiving auxiliary information transmitted from the terminal, wherein the auxiliary information is used to indicate whether the terminal uses the SDT mode to transmit data on the SRB1 and/or the SRB2; and
in case that it is determined that the terminal supports transmitting the data on the SRB1 and/or the SRB2 in the SDT mode, the transmission configuration for transmitting the data on the SRB 1 and/or the SRB2 in the SDT mode is determined.

25. The network device of claim 24, wherein the auxiliary information comprises one or more of the followings:
an indicator of performing data transmission on the SRB 1 and/or the SRB2 in the SDT mode in a radio resource control, RRC, inactive state or idle state;
a period of positioning information notified by a non-access stratum, NAS;
an estimated size of a data packet of the positioning information notified by the NAS;
sizes of data packets supporting SDT; and
service scenarios supporting SDT.

26. An apparatus for data transmission, applied to a terminal, comprising:
a receiving module, used for receiving an indication message transmitted from a network device, wherein the indication message comprises association information of a signaling radio bearer 1, SRB1, and/or a signaling radio bearer 2, SRB2; and
a determining module, used for determining whether to transmit data on the SRB 1 and/or the SRB2 in a small data transmission, SDT, mode based on the indication message.

27. The apparatus of claim 26, wherein the determining whether to transmit the data on the SRB1 and/or the SRB2 in the SDT mode based on the indication message comprises:
in case that the association information is that a serving cell where the terminal camps supports transmitting the data on the SRB 1 and/or the SRB2 in the SDT mode, the terminal camps in the serving cell and the data on the SRB1 and/or the SRB2 is transmitted in the SDT mode; or
in case that the association information is that a neighboring cell of a serving cell where the terminal camps supports transmitting the data on the SRB 1 and/or the SRB2 in the SDT mode, determining the neighboring cell of the serving cell as a target cell of the terminal for cell reselection.

28. The apparatus of claim 27, wherein the data on the SRB 1 is transmitted in the SDT mode comprises:
in case that the terminal satisfies a first given condition, the data on the SRB 1 is transmitted in the SDT mode,
wherein the first given condition comprises one or more of the followings:
the terminal performs minimization of drive test, MDT, information reporting;
the terminal performs measurement result reporting; and
SRB 1 signaling data to be transmitted by the terminal is less than or equal to a threshold of SRB 1 signaling data preconfigured by the network device.

29. The apparatus of claim 27, wherein the data on the SRB2 is transmitted in the SDT mode comprises:
in case that the terminal satisfies a second given condition, the data on the SRB2 is transmitted in the SDT mode,
wherein the second given condition comprises one or more of the followings:
the terminal performs positioning information reporting;
the terminal performs tracking area update, TAU;
the terminal performs signaling deregistration; and
SRB2 signaling data to be transmitted by the terminal is less than or equal to a threshold of the SRB2 signaling data preconfigured by the network device.

30. An apparatus for data transmission, applied to a network device, comprising:
a determining module, used for determining association information of transmitting data on a signaling radio bearer 1, SRB 1, and/or a signaling radio bearer 2, SRB2, in a small data transmission, SDT, mode; and
a transmitting module, used for transmitting an indication message to a terminal, wherein the indication message comprises the association information.

31. The apparatus of claim 30, wherein the association information comprises transmission configuration;
the determining the association information of transmitting the data on the SRB1 and/or the SRB2 in the SDT mode, comprises:
receiving auxiliary information transmitted from the terminal, wherein the auxiliary information is used to indicate whether the terminal uses the SDT mode to transmit data on the SRB1 and/or the SRB2; and
in case that it is determined that the terminal supports transmitting the data on the SRB 1 and/or the SRB2 in the SDT mode, the transmission configuration for transmitting the data on the SRB 1 and/or the SRB2 in the SDT mode is determined.

32. A processor-readable storage medium having a computer program stored thereon, and causing a processor to perform the method of any one of claims 1 to 12, or causing the processor to perform the method of any one of claims 13 to 15.

33. A computer program product having a computer program stored thereon, and causing a processor to perform the method of any one of claims 1 to 12, or causing the processor to perform the method of any one of claims 13 to 15.

34. A chip product having a computer program stored thereon, and causing a processor to perform the method of any one of claims 1 to 12, or causing the processor to perform the method of any one of claims 13 to 15.
